# EUROPEAN PATENT APPLICATION

(11) **EP 3 719 284 A1**
(43) Date of publication of application: **07.10.2020**
(21) Application number: 20163117.3
(22) Date of filing: 13.03.2020
(51) Int. Cl.: F02D 11/10, B60W 30/188, B60W 50/10, B60W 50/00, B60W 50/16

(54) **DRIVING FORCE CONTROL APPARATUS FOR VEHICLE**

(30) Priority: 01.04.2019 JP 2019070026
(71) Applicant: TOYOTA JIDOSHA KABUSHIKI KAISHA, Toyota-shi, Aichi-ken 471-8571 (JP)
(72) Inventor: OTSUBO, Hideaki, Aichi-ken, 471-8571 (JP); KUMAGAI, Kuninori, Aichi-ken, 471-8571 (JP); METSUGI, Hiromitsu, Aichi-ken, 471-8571 (JP); KAWASAKI, Daijiro, Aichi-ken, 471-8571 (JP)
(74) Representative: J A Kemp LLP

(57) **Abstract**

A driving force control apparatus for a vehicle includes an operation amount detection unit (7a); a vehicle speed detection unit (7d); and an electronic control unit (8). The electronic control unit (8) is configured to determine, when a vehicle speed is lower than a predetermined vehicle speed, a target driving force in a case where an operation amount of an accelerator pedal is in a predetermined range, based on a first provisional target driving force; and determine, when the vehicle speed is equal to or higher than the predetermined vehicle speed, the target driving force in the case where the operation amount of the accelerator pedal is in the predetermined range, based on a second provisional target driving force.

## Description

### BACKGROUND OF THE INVENTION

### 1. Field of the Invention

The present invention relates to an apparatus configured to control a driving force in accordance with an operation amount of an accelerator pedal.

### 2. Description of Related Art

Japanese Unexamined Patent Application Publication No. 2016-217292 describes a driving force control apparatus configured such that, when a driver switches the position of his/her foot from a brake pedal to an accelerator pedal at the time of turn-out when a vehicle is shifted from turning at a corner to traveling straightforward, the vehicle can travel steadily to keep a vehicle speed at that time in a comfortable foot posture of the driver. Specifically, a map is defined so that a target acceleration is "0" at an accelerator operation amount within a predetermined range that achieves the comfortable foot posture at any vehicle speed ranging from a low vehicle speed to a high vehicle speed. The target acceleration is determined based on the map and the accelerator operation amount.

### SUMMARY OF THE INVENTION

The driving force control apparatus described in Japanese Unexamined Patent Application Publication No. 2016-217292 is configured such that the vehicle can travel steadily when the driver operates the accelerator in a comfortable foot posture. That is, the driving force control apparatus described in Japanese Unexamined Patent Application Publication No. 2016-217292 is configured to increase a driving force along with an increase in the vehicle speed depending on a running resistance such as an air resistance or a rolling resistance between each wheel and a road because the running resistance increases as the vehicle speed increases. More specifically, the map is defined so that a driving force balanced with a running resistance at a low vehicle speed is generated when the accelerator operation amount is at a lower limit value of a permissible operation amount. Further, the map is defined so that a driving force balanced with a running resistance at a high vehicle speed is generated when the accelerator operation amount is at an upper limit value of the permissible operation amount. That is, driving forces ranging from the driving force balanced with the running resistance at the low vehicle speed to the driving force balanced with the running resistance at the high vehicle speed are distributed within the range of the permissible accelerator operation amount. As a result, the amount of change in the driving force relative to the amount of change in the accelerator operation amount increases. Thus, when the driving force is set so that the vehicle can travel steadily within the range of a low vehicle speed corresponding to a relatively small running resistance to a high vehicle speed corresponding to a relatively large running resistance, the driving force may greatly change to change the vehicle speed even if the accelerator operation amount changes slightly. That is, it may be difficult to control the vehicle speed through the accelerator operation alone.

The present invention provides a driving force control apparatus for a vehicle, with which the vehicle can travel steadily within a range of an accelerator operation amount that achieves a comfortable foot posture, and with which the vehicle speed can be controlled easily.

An aspect of the present invention relates to a driving force control apparatus for a vehicle. The driving force control apparatus includes an operation amount detection unit configured to detect an operation amount of an accelerator pedal operated by a driver; a vehicle speed detection unit configured to detect a vehicle speed; and an electronic control unit configured to determine a target driving force based on the operation amount of the accelerator pedal that is detected by the operation amount detection unit and the vehicle speed that is detected by the vehicle speed detection unit, and output a command signal based on the target driving force that is determined. The electronic control unit is configured to determine at least two provisional target driving forces based on the operation amount of the accelerator pedal and the vehicle speed, the at least two provisional target driving forces including a first provisional target driving force and a second provisional target driving force larger than the first provisional target driving force. The electronic control unit is configured to determine, based on the vehicle speed detected by the vehicle speed detection unit, whether the vehicle speed is equal to or higher than a predetermined vehicle speed. The electronic control unit is configured to determine, when the vehicle speed is lower than the predetermined vehicle speed, the target driving force in a case where the operation amount of the accelerator pedal is in a predetermined range, based on the first provisional target driving force, and determine, when the vehicle speed is equal to or higher than the predetermined vehicle speed, the target driving force in the case where the operation amount of the accelerator pedal is in the predetermined range, based on the second provisional target driving force.

In the aspect described above, the electronic control unit may include a predetermined first driving force map for determining the first provisional target driving force based on the operation amount of the accelerator pedal and the vehicle speed and a predetermined second driving force map for determining the second provisional target driving force based on the operation amount of the accelerator pedal and the vehicle speed.

In the aspect described above, the electronic control unit may be configured to correct the operation amount of the accelerator pedal to a first corrected value and a second corrected value larger than the first corrected value; and the electronic control unit may include a third driving force map for determining the first provisional target driving force based on the first corrected value and the vehicle speed, and determining the second provisional target driving force based on the second corrected value and the vehicle speed.

In the aspect described above, the electronic control unit may be configured to: set the first provisional target driving force such that the first provisional target driving force decreases as the vehicle speed increases; determine a third provisional target driving force that decreases at a predetermined decrease rate lower than a decrease rate of the first provisional target driving force that decreases as the vehicle speed increases; and determine the target driving force based on the third provisional target driving force when the operation amount of the accelerator pedal increases while the vehicle is traveling at the vehicle speed that is lower than the predetermined vehicle speed.

In the aspect described above, the electronic control unit may be configured to: set the second provisional target driving force such that the second provisional target driving force decreases as the vehicle speed increases; and determine the target driving force based on a smaller one of the second provisional target driving force and the third provisional target driving force.

According to the aspect of the present invention, when the vehicle speed is lower than the predetermined vehicle speed, the target driving force in the case where the operation amount of the accelerator pedal is in the predetermined range is determined based on the relatively small first provisional target driving force, and when the vehicle speed is equal to or higher than the predetermined vehicle speed, the target driving force in the case where the operation amount of the accelerator pedal is in the predetermined range is determined based on the relatively large second provisional target driving force. Thus, it is possible to assign the corresponding first provisional target driving force to the accelerator operation amount in the predetermined range so that the vehicle can travel steadily in a vehicle speed range lower than the predetermined vehicle speed, and to assign the corresponding second provisional target driving force to the accelerator operation amount in the predetermined range so that the vehicle can travel steadily in a vehicle speed range equal to or higher than the predetermined vehicle speed. That is, it is possible to reduce a change in the driving force in response to a change in the accelerator operation amount. As a result, the vehicle can travel steadily through the operation of the accelerator within the predetermined range that achieves the comfortable foot posture, and the vehicle speed can easily be controlled without excessively adjusting the accelerator operation amount.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram illustrating an example of a structure and a control system of a vehicle according to an embodiment of the present invention;
FIG. 2 is a functional block diagram for describing an example of control on a driving force and a braking force of the vehicle;
FIG. 3 is a schematic diagram illustrating an example of a map for correcting an accelerator operation amount;
FIG. 4 is a diagram illustrating an example of a driving force map for determining a provisional target driving force based on the accelerator operation amount and a vehicle speed;
FIG. 5 is a diagram illustrating an example of an acceleration map obtained by replacing the provisional target driving force in FIG. 4 with an acceleration;
FIG. 6 is a diagram illustrating a relationship between an accelerator operation amount and a vehicle speed that achieve steady traveling;
FIG. 7 is a diagram illustrating an example of a reaction force characteristic map showing a relationship between the accelerator operation amount and the magnitude of a reaction force of a reaction mechanism;
FIG. 8 is a flowchart for describing an example of control of a driving force control apparatus according to the embodiment of the present invention;
FIG. 9 is a diagram illustrating an example of a high-vehicle speed map;
FIG. 10A and FIG. 10B are diagrams for describing a change in a target acceleration when the control in the example illustrated in FIG. 8 is executed, in which FIG. 10A is a diagram illustrating a base map and FIG. 10B is a diagram illustrating a high-vehicle speed map;
FIG. 11 is a flowchart for describing an example of control for switching a referenced driving force map (acceleration map) from the high-vehicle speed map to the base map; and
FIG. 12A and FIG. 12B are diagrams for describing a change in the target acceleration when the control in the example illustrated in FIG. 11 is executed, in which FIG. 12A is a diagram illustrating a base map and FIG. 12B is a diagram illustrating a high-vehicle speed map.

### DETAILED DESCRIPTION OF EMBODIMENTS

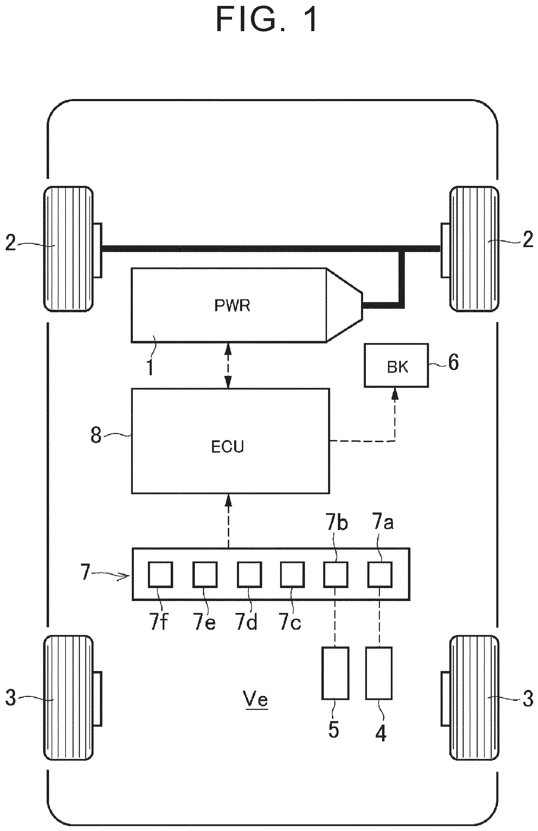

FIG. 1 illustrates an example of a drive system and a control system of a vehicle Ve according to an embodiment of the present invention. The vehicle Ve illustrated in FIG. 1 includes a drive source (PWR) 1, front wheels 2, rear wheels 3, an accelerator pedal 4, a brake pedal 5, a braking device (BK) 6, a detection unit 7, and an electronic control unit (ECU) 8 as main components.

The drive source 1 is a power source configured to output a torque for generating a driving force of the vehicle Ve. Examples of the drive source 1 include internal combustion engines such as a gasoline engine and a diesel engine. The drive source 1 is configured such that power adjustment and operation conditions such as a start and stop are controlled electrically. In the case of a gasoline engine, a throttle valve opening degree, a fuel supply amount or a fuel injection amount, a start and stop of ignition, and an ignition timing are controlled electrically. In the case of a diesel engine, a fuel injection amount, a fuel injection timing, or a throttle valve opening degree in an exhaust gas recirculation (EGR) system is controlled electrically.

Examples of the drive source 1 according to the embodiment of the present invention may also include motors such as a permanent magnet synchronous motor and a permanent magnet induction motor. In this case, the motor functions, for example, both as a motor configured to output a motor torque by being driven through electric power supply, and as a generator configured to generate electricity by being rotated in response to a torque from the outside. That is, the motor has a function of generating electricity (so-called motor generator), and the rotation speed, the torque, or switching between the motor function and the generator function is controlled electrically.

In the vehicle Ve, a driving force is generated when the torque output from the drive source 1 is transmitted to driving wheels. FIG. 1 illustrates the structure of a front-wheel-drive vehicle having the front wheels 2 as the driving wheels. The vehicle Ve according to the embodiment of the present invention may be a rear-wheel-drive vehicle having the rear wheels 3 as the driving wheels. The vehicle Ve may also be a four-wheel-drive vehicle having both the front wheels 2 and the rear wheels 3 as the driving wheels. If an engine is mounted as the drive source 1, the vehicle Ve may be configured such that a continuously variable transmission or a stepped transmission (not illustrated) is provided on an output side of the engine and a driving torque output from the drive source 1 is transmitted to the driving wheels via the transmission.

The vehicle Ve is provided with the accelerator pedal 4 having a general known structure and to be operated by a driver for adjusting the driving force to accelerate the vehicle Ve. When the driver depresses the accelerator pedal 4, the torque output from the drive source 1 increases in conjunction with the operation amount of the accelerator pedal 4 (depression amount, accelerator operation amount, or accelerator pedal position). Thus, the driving force of the vehicle Ve increases. When the driver returns the accelerator pedal 4 (turns OFF the accelerator, reduces the accelerator operation amount, or returns the accelerator pedal position), the torque output from the drive source 1 decreases in conjunction with the operation amount of the accelerator pedal 4. Thus, the driving force of the vehicle Ve decreases. In a case where a motor is mounted as the drive source 1, if the motor functions as a generator to generate a so-called regenerative torque, a braking force is generated in the vehicle Ve. In a case where an engine is mounted as the drive source 1, if the accelerator is turned OFF to stop combustion of an air-fuel mixture in the engine and cause so-called engine braking, the braking force of the vehicle Ve increases. The engine braking is a phenomenon in which a friction torque or a pumping loss in the engine serves as a resistance force (braking torque) against the driving torque such that a braking force is applied in the vehicle Ve.

The vehicle Ve is provided with the brake pedal 5 to be operated by the driver for adjusting the braking force to brake the vehicle Ve. When the driver depresses the brake pedal 5, the braking device 6 of the vehicle Ve is actuated to generate a braking force in the vehicle Ve. Examples of the braking device 6 include general related-art devices such as a hydraulic disc brake and a hydraulic drum brake.

The detection unit 7 acquires various types of data for controlling respective parts of the vehicle Ve. In particular, the detection unit 7 detects various types of data related to an operation condition of the accelerator pedal 4 and an operation condition of the brake pedal 5. The detection unit 7 is a generic term for sensors or devices configured to detect various types of data. In the example illustrated in FIG. 1, the detection unit 7 includes an accelerator position sensor 7a, a brake stroke sensor 7b, a hydraulic pressure sensor 7c, a wheel speed sensor 7d, an acceleration sensor 7e, and a switch 7f. The accelerator position sensor 7a detects an operation amount of the accelerator pedal 4 (that is, an accelerator pedal position or an accelerator operation amount). The brake stroke sensor 7b detects an operation amount of the brake pedal 5 (that is, a brake pedal stroke or a brake pedal operation amount). The hydraulic pressure sensor 7c detects a braking hydraulic pressure and a brake depression force. The wheel speed sensor 7d detects a vehicle speed. The acceleration sensor 7e detects an acceleration in a front-rear direction of the vehicle Ve. The switch 7f is operated by the driver to set a one-pedal mode described later. The detection unit 7 is electrically connected to the ECU 8, and outputs electric signals to the ECU 8 as detection data based on detection values of various sensors or devices described above. The accelerator position sensor 7a is an example of an "operation amount detection unit" according to the embodiment of the present invention. The wheel speed sensor 7d is an example of a "vehicle speed detection unit" according to the embodiment of the present invention.

The ECU 8 is an example of a "controller" according to the embodiment of the present invention. For example, the ECU 8 is mainly constructed of a microcomputer, and various types of data detected by the detection unit 7 are input to the ECU 8. The ECU 8 performs calculation by using various types of input data and prestored data and calculation formulae, and outputs calculation results as control command signals to control the vehicle Ve.

Specifically, the ECU 8 acquires data related to the operation condition of the accelerator pedal 4 that is detected by the accelerator position sensor 7a, and data related to the vehicle speed that is detected by the wheel speed sensor 7d, and calculates a target torque (or a target acceleration) of the drive source 1 based on the acquired pieces of data. The ECU 8 controls the output of the drive source 1 based on the calculated target torque. That is, the ECU 8 outputs a control command signal for controlling the drive source 1. If the calculated target torque (target acceleration) is a braking torque (deceleration) for decelerating the vehicle Ve, the ECU 8 outputs a command signal for causing the drive source 1 to generate a braking torque corresponding to the target torque, or causing the braking device 6 to generate the braking torque as necessary. That is, the ECU 8 outputs a control command signal for controlling the driving force and the braking force. FIG. 1 illustrates an example in which one ECU 8 is provided, but a plurality of ECUs 8 may be provided respectively for, for example, apparatuses or devices to be controlled or details of control.

The vehicle Ve according to the embodiment of the present invention can travel in a so-called one-pedal mode. In the one-pedal mode, in the vehicle Ve, a driving force (including a braking force) is controlled based on the operation amount of the accelerator pedal 4 operated by the driver within a relatively wide range from a maximum driving force that can be generated in the vehicle Ve to a braking force required for normal traveling except a braking force required for an emergency stop. That is, in the one-pedal mode, deceleration including a stop can be performed during normal traveling without operating the brake pedal 5. In the one-pedal mode, the system generally controls the driving force by controlling the drive source 1 in response to a depressing operation of the accelerator pedal 4, but may control the braking device 6 in combination. As described above, the vehicle Ve includes the accelerator pedal 4 and the brake pedal 5, and can travel by controlling the driving force and the braking force based on the operation amounts of the accelerator pedal 4 and the brake pedal 5 (normal mode). That is, the vehicle Ve can travel while selectively switching the two traveling modes that are the normal mode similar to that of related art and the one-pedal mode.

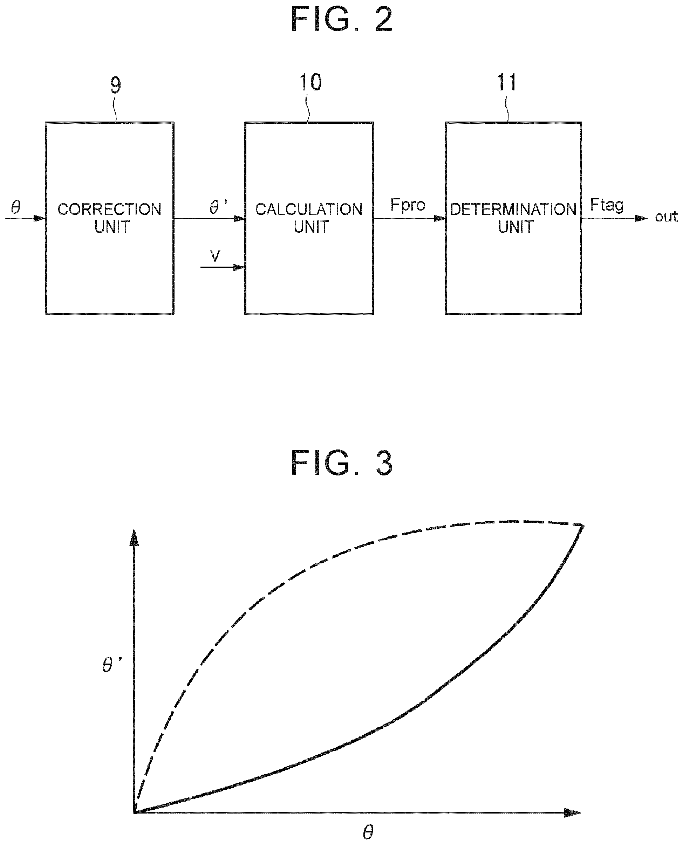

The one-pedal mode is described in detail. The one-pedal mode is a traveling mode in which the vehicle Ve is accelerated and decelerated through the driver's operation for the accelerator pedal 4 alone. FIG. 2 is a functional block diagram for describing an example of control on the driving force and the braking force of the vehicle Ve. In the example illustrated in FIG. 2, a correction unit 9, a calculation unit 10, and a determination unit 11 are provided. The correction unit 9 corrects an accelerator operation amount θ. The calculation unit 10 determines a provisional value Fpro of a target driving force Ftag (hereinafter referred to as a provisional target driving force Fpro) based on an output value θ' from the correction unit 9 and a vehicle speed V. The determination unit 11 determines the target driving force Ftag based on the provisional target driving force Fpro calculated by the calculation unit 10.

The accelerator operation amount θ detected by the detection unit 7 is input to the correction unit 9 illustrated in FIG. 2. The correction unit 9 corrects the accelerator operation amount θ by using a correction map determined in advance based on a sensory test or the like. FIG. 3 illustrates an example of the correction map. The horizontal axis represents the accelerator operation amount θ, and the vertical axis represents the corrected value θ'. As indicated by a continuous line in FIG. 3, the corrected value θ' increases as the accelerator operation amount θ increases. In principle, the corrected value θ' is uniquely determined in relation to the accelerator operation amount θ. In the following description, the accelerator operation amount θ and the corrected value θ' are referred to simply as the accelerator operation amount θ for convenience without distinction.

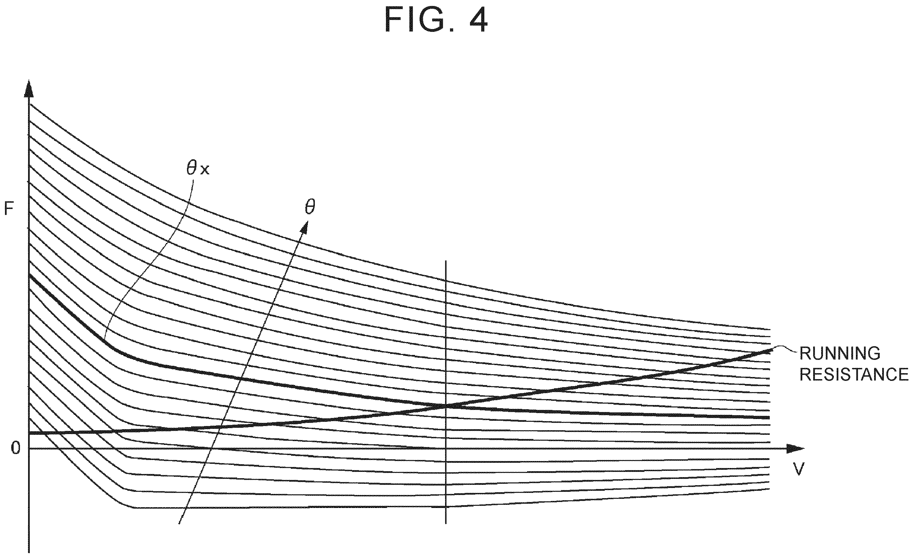

The accelerator operation amount θ and the vehicle speed V detected by the detection unit 7 are input to the calculation unit 10. The calculation unit 10 stores a driving force map for determining the provisional target driving force Fpro based on the accelerator operation amount θ and the vehicle speed V. FIG. 4 illustrates an example of the driving force map. In the driving force map illustrated in FIG. 4, the horizontal axis represents the vehicle speed V, and the vertical axis represents a driving force F. Each continuous line indicates a relationship between the vehicle speed V and the driving force F that is determined for each accelerator operation amount θ. The driving force (provisional target driving force Fpro) decreases as the vehicle speed V increases at any accelerator operation amount θ.

The provisional target driving force Fpro determined by the calculation unit 10 is input to the determination unit 11. The determination unit 11 determines the target driving force Ftag in consideration of, for example, a limit value of the driving torque that is determined based on the temperature and the rotation speed of the drive source 1. The determination unit 11 outputs the target driving force Ftag to the drive source 1 as a control command signal. The following description is given under the assumption that the provisional target driving force Fpro determined by the calculation unit 10 is directly determined as the target driving force Ftag without being limited by the temperature of the drive source 1 or the like. Thus, the provisional target driving force Fpro is referred to as the target driving force Ftag.

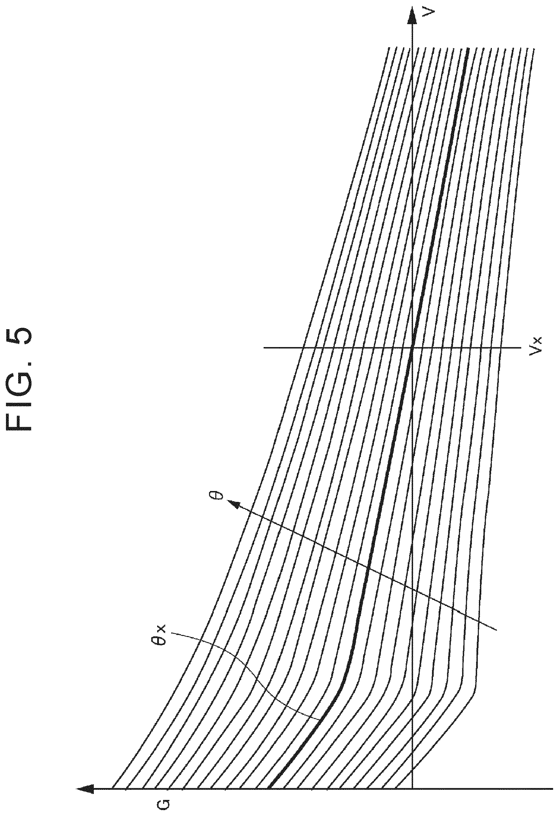

When the vehicle Ve is traveling, a running resistance such as an air resistance or a rolling friction resistance is generated depending on the vehicle speed V. The running resistance is indicated by a thick line in FIG. 4. When the driving force is output based on the driving force map illustrated in FIG. 4, an acceleration is generated based on a propulsion obtained by subtracting the running resistance from the driving force. FIG. 5 illustrates a map obtained by replacing the target driving force Ftag on the vertical axis of FIG. 4 with an acceleration (target acceleration Gtag) obtained by subtracting the running resistance from the target driving force Ftag. The running resistance in this case is a theoretical value of a running resistance to be generated when the vehicle Ve travels along a flat road. A change in the air resistance along with air density and a change in the resistance along with a gradient of the road are not taken into consideration.

When the vehicle Ve travels at a vehicle speed Vx and the accelerator operation amount θ is θx indicated by a thick line as illustrated in FIG. 5, the vehicle Ve travels steadily to keep a constant vehicle speed V (that is, an acceleration of "0") because the driving force is balanced with the running resistance. The vehicle Ve is accelerated when the accelerator pedal 4 is depressed so that the accelerator operation amount θ is larger than the accelerator operation amount θx. The vehicle Ve is decelerated when the accelerator pedal 4 is depressed so that the accelerator operation amount θ is smaller than the accelerator operation amount θx.

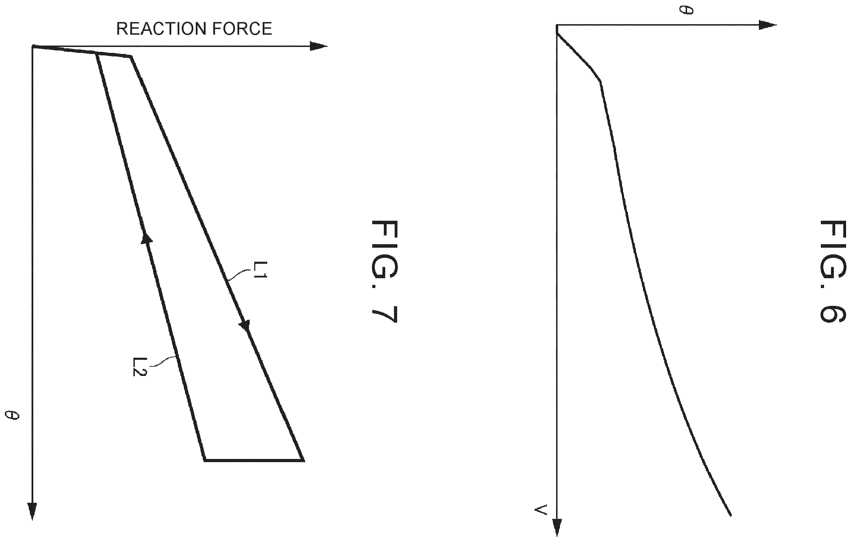

FIG. 6 illustrates a relationship between the accelerator operation amount θ and the vehicle speed V that achieve the steady traveling illustrated in FIG. 5. In FIG. 6, the horizontal axis represents the vehicle speed V, and the vertical axis represents the accelerator operation amount θ. As illustrated in FIG. 6, the accelerator operation amount (corrected value θ') at which the acceleration is 0 gradually increases as the vehicle speed V increases.

The accelerator pedal 4 is provided with a reaction mechanism (not illustrated) configured to generate a reaction force against the depression force of the accelerator pedal 4. The reaction mechanism is set so that the reaction force gradually increases as illustrated in FIG. 7 within a range from an initial position at which the driver releases the foot from the accelerator pedal 4 to a maximum position at which the driver depresses the accelerator pedal 4 maximally. In FIG. 7, a continuous line L1 indicates a characteristic of a reaction force to be generated when the driver depresses the accelerator pedal 4, and a continuous line L2 indicates a characteristic of a reaction force to be generated when the driver returns the accelerator pedal 4.

In order that the vehicle Ve may travel steadily as illustrated in FIG. 6, the driver depresses the accelerator pedal 4 more greatly (by a greater amount) as the vehicle speed increases. At this time, the required depression force for the accelerator pedal 4 increases as illustrated in FIG. 7. While the vehicle Ve is traveling steadily, there is a strong possibility that the operation amount of the accelerator pedal 4 is kept for a relatively long time. Therefore, it is preferable that the operation amount of the accelerator pedal 4 that achieves the steady traveling be set within a predetermined range that achieves a driver's comfortable foot posture determined based on, for example, the angle of the driver's ankle and the self-weight of the accelerator pedal 4.

The movable range of the accelerator pedal 4 from the initial position to the maximum position is determined in terms of its structure. In the one-pedal mode in which a force ranging from a relatively large braking force to a maximum driving force can be controlled through an operation for the accelerator pedal 4 alone, the amount of change in the driving force relative to the amount of change in the accelerator operation amount increases when the map is defined such that a driving force balanced with a running resistance at a low vehicle speed is output at a lower limit value of the accelerator operation amount within the predetermined range that achieves the comfortable foot posture and a driving force balanced with a running resistance at a high vehicle speed is output at an upper limit value of the accelerator operation amount within the predetermined range. Thus, the vehicle speed V increases in response to only a slight change in the accelerator operation amount. That is, it may be difficult to control the vehicle speed V through the accelerator operation alone.

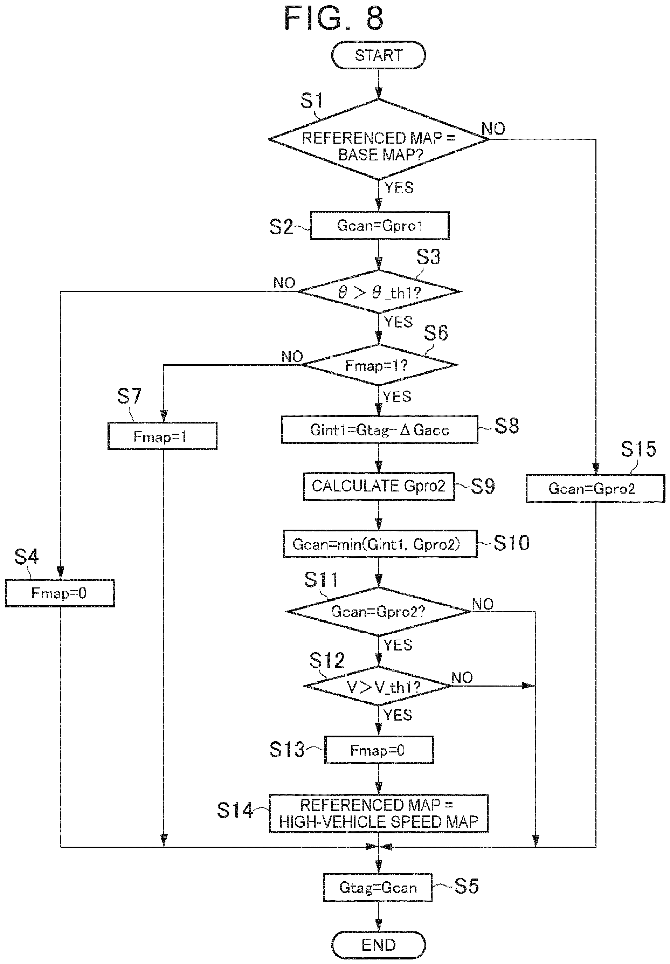

A driving force control apparatus according to the embodiment of the present invention can change the relationship between the accelerator operation amount and the target driving force Ftag to be set depending on the accelerator operation amount. FIG. 8 illustrates an example of the control. As described above, the acceleration map illustrated in FIG. 5 is based on a value obtained by subtracting the theoretical value of the running resistance from a driving force determined in the driving force map illustrated in FIG. 4. Therefore, the acceleration map and the driving force map can be regarded as being substantially identical to each other. In the following description, the target acceleration Gtag is determined by using the map illustrated in FIG. 5 for convenience instead of the target driving force Ftag.

In the example illustrated in FIG. 8, determination is first made as to whether a map currently referenced to determine the target acceleration Gtag is a base map (Step S1). The base map is the acceleration map illustrated in FIG. 5. The result of determination in Step S1 is "YES" until the referenced acceleration map is switched as described later. The base map corresponds to a "first driving force map" or a "third driving force map" according to the embodiment of the present invention.

When the result of determination in Step S1 is "YES" because the base map is referenced, a first provisional target acceleration Gprol is calculated based on a current vehicle speed V, a current accelerator operation amount θ, and the base map, and is stored in the ECU 8 as candidate data Gcan (Step S2).

Next, determination is made as to whether the accelerator operation amount θ detected by the accelerator position sensor 7a is larger than a first predetermined operation amount θ_th1 (Step S3). For example, the first predetermined operation amount θ_th1 can be set to an accelerator operation amount θ at which the acceleration G is "0" when the vehicle speed V is a first predetermined vehicle speed V_th1 in Step S12 described later. For example, the first predetermined operation amount θ_th1 may be a variable that changes to a larger value as the road gradient angle increases. That is, determination is made in Step S3 as to whether the accelerator pedal 4 is depressed up to the upper limit operation amount within the range that achieves the comfortable foot posture, or up to the vicinity of the upper limit operation amount.

When the result of determination in Step S3 is "NO" because the accelerator operation amount θ is equal to or smaller than the first predetermined operation amount θ_th1, a flag Fmap is kept at "0" (OFF) (Step S4). The flag Fmap indicates that transition of the referenced map is in progress. Next, the candidate data Gcan stored in Step S2 is temporarily stored in the ECU 8 as the target acceleration Gtag (Step S5), and the routine is terminated temporarily. That is, the first provisional target acceleration Gprol is set to the target acceleration Gtag. The driving force is controlled based on the target acceleration Gtag stored in Step S5.

When the result of determination in Step S3 is "YES" because the accelerator operation amount θ is larger than the first predetermined operation amount θ_th1, determination is made as to whether the flag Fmap is "1" (ON) (Step S6). That is, determination is made as to whether control for transition of the referenced map is already executed when the current routine is executed. In other words, determination is made as to whether the control for transition of the referenced map is not completed at the end of the previous routine.

When the result of determination in Step S6 is "NO" because the flag Fmap is not "1", that is, when the control for transition of the map is not executed currently, the flag Fmap is switched to "1" (Step S7), and the operation proceeds to Step S5. In Step S5, the first provisional target acceleration Gprol determined in Step S2 is set to the target acceleration Gtag. When the result of determination in Step S6 is "YES" because the flag Fmap is "1", a first transient acceleration (intermediate acceleration) Gint1 is calculated by subtracting a predetermined acceleration ΔGacc from a target acceleration Gtag stored in the ECU 8 in the previous routine (Step S8). The predetermined acceleration ΔGacc for use in Step S8 is set to a value smaller than an amount of change in the acceleration G along with an increase in the vehicle speed V when the acceleration is controlled based on the base map. Further, the predetermined acceleration ΔGacc is set so that the rate of change in the acceleration does not increase excessively when the map is switched to a high-vehicle speed map as described later. Step S8 corresponds to a "transient calculation unit" according to the embodiment of the present invention. The first transient acceleration Gint1 corresponds to a "third provisional target driving force" according to the embodiment of the present invention.

Next, an acceleration (hereinafter referred to as a second provisional target acceleration Gpro2) is determined based on a current accelerator operation amount θ and the high-vehicle speed map (Step S9). The high-vehicle speed map is defined such that an acceleration Gmin when the depression amount of the accelerator pedal 4 (accelerator operation amount θ) is 0 and an acceleration Gmax when the depression amount of the accelerator pedal 4 (accelerator operation amount θ) is maximum are set to be equal to those in the base map, and the second provisional target acceleration Gpro2 when the accelerator pedal 4 is depressed within a range smaller than the maximum value is larger than the first provisional target acceleration Gprol determined based on the base map.

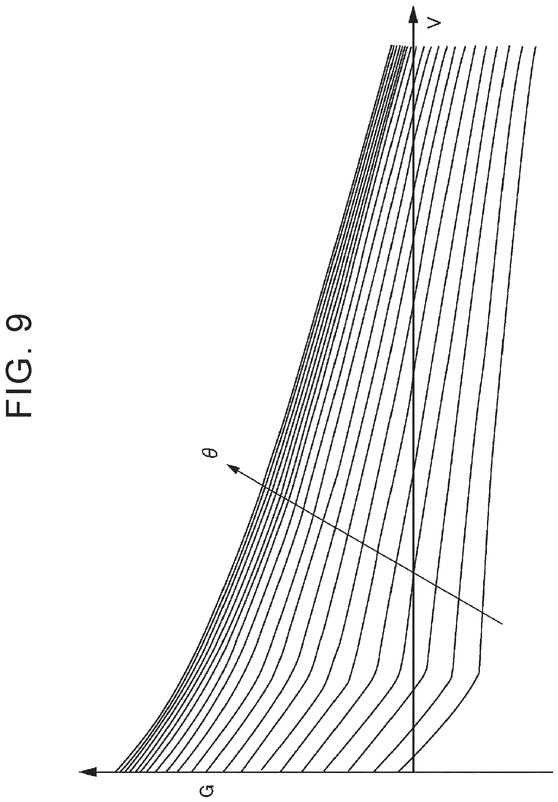

More specifically, the high-vehicle speed map is defined such that, when the accelerator is operated within the range of the accelerator operation amount that achieves the comfortable foot posture, a vehicle speed range in which the driving force is balanced with the running resistance based on the high-vehicle speed map is placed above a vehicle speed range in which the driving force is balanced with the running resistance based on the base map. FIG. 9 illustrates an example of the high-vehicle speed map. In the example illustrated in FIG. 9, acceleration characteristic curves are plotted for respective predetermined accelerator operation amounts θ. When the accelerator operation amount θ is small, the acceleration characteristic curves are sparse. When the accelerator operation amount θ is large, the acceleration characteristic curves are dense. In the example illustrated in FIG. 9, the amount of change in the second provisional target acceleration Gpro2 relative to the amount of change in the accelerator operation amount θ increases as the accelerator operation amount θ decreases. The high-vehicle speed map corresponds to a "second driving force map" according to the embodiment of the present invention.

Next, the candidate data Gcan is overwritten with an acceleration G_min, and is stored in the ECU 8 (Step S10). The acceleration G_min is a smaller one of the first transient acceleration Gint1 calculated in Step S8 and the second provisional target acceleration Gpro2 calculated in Step S9. Next, determination is made as to whether the candidate data Gcan is the second provisional target acceleration Gpro2, that is, whether the acceleration G_min selected in Step S10 is the second provisional target acceleration Gpro2 (Step S11). Step S11 is provided to determine whether the acceleration does not change stepwise even if the referenced map is switched. That is, Step S11 is provided to determine whether one of the conditions for switching the referenced map to the high-vehicle speed map is satisfied.

When the result of determination in Step S11 is "NO" because the first transient acceleration Gint1 is smaller than the second provisional target acceleration Gpro2, the operation proceeds to Step S5 without executing subsequent steps. That is, the candidate data Gcan overwritten in Step S10 (in this case, the first transient acceleration Gint1) is temporarily stored in the ECU 8 as the target acceleration Gtag.

As described above, the driving force control apparatus according to the embodiment of the present invention is intended to set the accelerator operation amount during the steady traveling within the predetermined operation amount range that achieves the driver's comfortable foot posture, and to restrain the increase in the amount of change in the driving force relative to the amount of change in the accelerator operation amount within the predetermined operation amount range. When the depression amount of the accelerator pedal 4 is reduced at a relatively low vehicle speed, the vehicle Ve can travel steadily at an operation amount that achieves the driver's comfortable foot posture by setting the target acceleration Gtag based on the base map without switching the map to the high-vehicle speed map. In other words, if the map referenced to set the driving force is switched to the high-vehicle speed map at a low vehicle speed, the depression amount of the accelerator pedal 4 that achieves the steady traveling may be smaller than the lower limit value of the operation amount that achieves the driver's comfortable foot posture.

When the result of determination in Step S11 is "YES" because the second provisional target acceleration Gpro2 is smaller than the first transient acceleration Gint1, determination is made as to whether the current vehicle speed V is higher than the first predetermined vehicle speed V_th1 (Step S12). The first predetermined vehicle speed V_th1 is provided to determine whether the map referenced to set the driving force is to be switched from a low-vehicle speed map to the high-vehicle speed map. For example, the first predetermined vehicle speed V_th1 may be a vehicle speed determined based on the base map such that the acceleration is "0" when the driver depresses the accelerator pedal 4 at the upper limit value of the accelerator operation amount that achieves the driver's comfortable foot posture.

When the result of determination in Step S12 is "NO" because the current vehicle speed V is equal to or lower than the first predetermined vehicle speed V_th1, the operation proceeds to Step S5 without executing subsequent steps. That is, the candidate data Gcan overwritten in Step S10 (in this case, the second provisional target acceleration Gpro2) is temporarily stored in the ECU 8 as the target acceleration Gtag. When the result of determination in Step S12 is "YES" because the current vehicle speed V is higher than the first predetermined vehicle speed V_th1, the flag Fmap is switched to 0 (Step S13), the referenced map is switched to the high-vehicle speed map (Step S14), and the operation proceeds to Step S5. That is, the candidate data Gcan overwritten in Step S10 (in this case, the second provisional target acceleration Gpro2) is temporarily stored in the ECU 8 as the target acceleration Gtag.

When the result of determination in Step S1 is "NO" because the currently referenced map is not the base map, the second provisional target acceleration Gpro2 is calculated based on a current vehicle speed V, a current accelerator operation amount θ, and the high-vehicle speed map, and is stored in the ECU 8 as the candidate data Gcan (Step S15). Then, the candidate data Gcan is temporarily stored in the ECU 8 as the target acceleration Gtag (Step S5), and the routine is terminated temporarily.

In the control example illustrated in FIG. 8, the referenced map is switched from the base map to the high-vehicle speed map when two conditions are satisfied. The first condition is that the second provisional target acceleration Gpro2 is smaller than the first transient acceleration Gint1. The second condition is that the vehicle speed V is higher than the first predetermined vehicle speed V_th1. The driving force is controlled based on the base map when the accelerator operation amount is set within the range that achieves the comfortable foot posture before the two conditions are satisfied. The driving force is controlled based on the high-vehicle speed map when the accelerator operation amount is set within the range that achieves the comfortable foot posture after the two conditions are satisfied. The condition that the second provisional target acceleration Gpro2 is smaller than the first transient acceleration Gint1 is provided to restrain a stepwise change in the acceleration due to map switching. The driving force control apparatus according to the embodiment of the present invention may not use this condition.

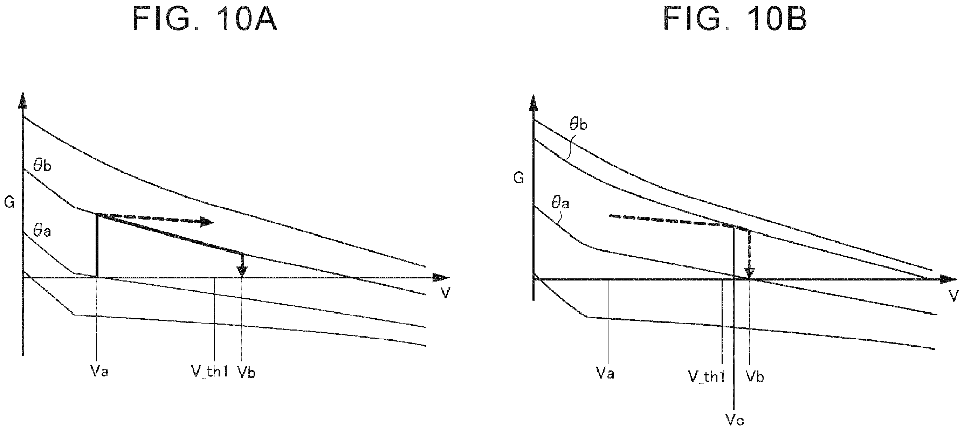

FIG. 10A and FIG. 10B are diagrams for describing a change in the target acceleration Gtag when the control in the example illustrated in FIG. 8 is executed. FIG. 10A illustrates the base map. FIG. 10B illustrates the high-vehicle speed map. In a state in which the vehicle Ve is traveling steadily at a vehicle speed Va by depressing the accelerator pedal 4 by an accelerator operation amount θa, the vehicle Ve is accelerated by depressing the accelerator pedal 4 up to an accelerator operation amount θb, and the map is switched to the high-vehicle speed map. Then, the vehicle Ve travels steadily by returning the accelerator pedal 4 to the accelerator operation amount θa. In the example illustrated in FIG. 10A and FIG. 10B, the target acceleration Gtag is set by referencing the base map at the vehicle speed Va.

Since the base map is referenced at the vehicle speed Va in the example illustrated in FIG. 10A and FIG. 10B, the result of determination in Step S1 of FIG. 8 is "YES", and the first provisional target acceleration Gprol is determined based on the base map. When the accelerator operation amount is θa at the vehicle speed Va, the result of determination in Step S3 of FIG. 8 is "NO", and therefore the first provisional target acceleration Gprol is set as the target acceleration Gtag. When the accelerator operation amount is increased to and kept at θb in that state, the first provisional target acceleration Gprol is first set as the target acceleration Gtag upon the increase in the accelerator operation amount to θb. In a subsequent routine in the flowchart illustrated in FIG. 8, the first transient acceleration Gint1 obtained by subtracting the predetermined acceleration ΔGacc from the first provisional target acceleration Gprol is set as the target acceleration Gtag. That is, the target acceleration Gtag gradually decreases so that the rate of change in the acceleration relatively decreases as indicated by a dashed line in FIG. 10A.

In the example illustrated in FIG. 10A and FIG. 10B, the vehicle speed V is increased to a vehicle speed higher than the first predetermined vehicle speed V_th1, and the first transient acceleration Gint1 at the first predetermined vehicle speed V_th1 is smaller than the second provisional target acceleration Gpro2. Therefore, the result of determination in Step S11 of FIG. 8 is "NO" until the first transient acceleration Gint1 is larger than the second provisional target acceleration Gpro2 at a vehicle speed Vc illustrated in FIG. 10B. Thus, the first transient acceleration Gint1 is set as the target acceleration Gtag.

When the first transient acceleration Gint1 is larger than the second provisional target acceleration Gpro2 at the vehicle speed Vc, the result of determination in Step S11 of FIG. 8 is "YES". As a result, the second provisional target acceleration Gpro2 is set as the target acceleration Gtag. Since the vehicle speed Vc is higher than the first predetermined vehicle speed V_th1, the result of determination in Step S12 of FIG. 8 is "YES" simultaneously with the timing when the result of determination in Step S11 is "YES". Thus, the referenced map is switched to the high-vehicle speed map when the first transient acceleration Gint1 is larger than the second provisional target acceleration Gpro2.

As a result, the target acceleration Gtag when the accelerator operation amount is reduced from θb to θa at a vehicle speed Vb is the second provisional target acceleration Gpro2 determined based on the high-vehicle speed map. Therefore, the vehicle Ve can travel steadily at the accelerator operation amount θa even after the vehicle Ve is accelerated. That is, the vehicle Ve can travel steadily in a comfortable foot posture. In this example, the vehicle Ve travels steadily by returning the accelerator operation amount to θa after the vehicle Ve is accelerated, but the accelerator operation amount may be returned to an operation amount larger or smaller than θa. In this case as well, the accelerator operation amount θ that can achieve the steady traveling can be set so that the driver is in the comfortable foot posture as compared to the case where the target acceleration Gtag is set based on the base map.

By switching between the map referenced at a relatively low vehicle speed (base map) and the map referenced at a relatively high vehicle speed (high-vehicle speed map), the accelerator operation amounts θ that can achieve the steady traveling at vehicle speeds in the wide range of vehicle speed can be set within the permissible range that achieves the comfortable foot posture. Further, the amount of change in the acceleration relative to the amount of change in the accelerator operation amount θ can be set to be substantially equal to that in the case where the acceleration is controlled based on the base map. In other words, it is possible to assign the corresponding first provisional target driving force Gprol to an accelerator operation amount in a predetermined range so that the vehicle Ve can travel steadily in a vehicle speed range lower than the first predetermined vehicle speed V_th1, and to assign the corresponding second provisional target driving force Gpro2 to the accelerator operation amount in the predetermined range so that the vehicle Ve can travel steadily in a vehicle speed range equal to or higher than the first predetermined vehicle speed V_th1. That is, it is possible to reduce the change in the driving force in response to the change in the accelerator operation amount. As a result, the vehicle Ve can travel steadily by operating the accelerator within the predetermined range that achieves the comfortable foot posture, and the vehicle speed can be easily controlled without excessively adjusting the accelerator operation amount.

The change in the acceleration due to the switching from the base map to the high-vehicle speed map can be reduced by setting the target acceleration Gtag based on the first transient acceleration Gint1 during acceleration. Thus, a shock or driver's discomfort can be restrained. The base map is switched to the high-vehicle speed map when the vehicle speed V is higher than the first predetermined vehicle speed V_th1. Thus, the accelerator operation amount θ that can achieve the steady traveling can be set within the range that achieves the comfortable foot posture even if the accelerator operation amount θ is reduced so that the vehicle Ve travels steadily at a vehicle speed lower than the first predetermined vehicle speed V_th1.

In the control example illustrated in FIG. 8, the target acceleration Gtag is set based on the first transient acceleration Gint1 or the second provisional target acceleration Gpro2 during acceleration. For example, there is a possibility that the vehicle speed V does not reach the first predetermined vehicle speed V_th1 because the depression amount of the accelerator pedal 4 is small. Whether to switch the map or whether to set the first transient acceleration Gint1 may be determined based on whether the vehicle speed V may be equal to or higher than the first predetermined vehicle speed V_th1. For example, the vehicle speed V at which the vehicle Ve travels steadily may be predicted based on the base map and the accelerator operation amount θ after the accelerator pedal 4 is depressed, and determination may be made in Step S3 of FIG. 8 as to whether the predicted vehicle speed V is higher than the first predetermined vehicle speed V_th1. For example, the prediction can be performed based on the rate of change in the accelerator operation amount θ in addition to the amount of change in the accelerator operation amount θ. Alternatively, determination can be made based on whether the vehicle Ve is traveling on a road where the speed limit changes to a higher vehicle speed by using data from infrastructure such as a navigation system. Alternatively, determination can be made based on information on a traffic jam or a distance from a vehicle traveling ahead that is detected by an on-board camera.

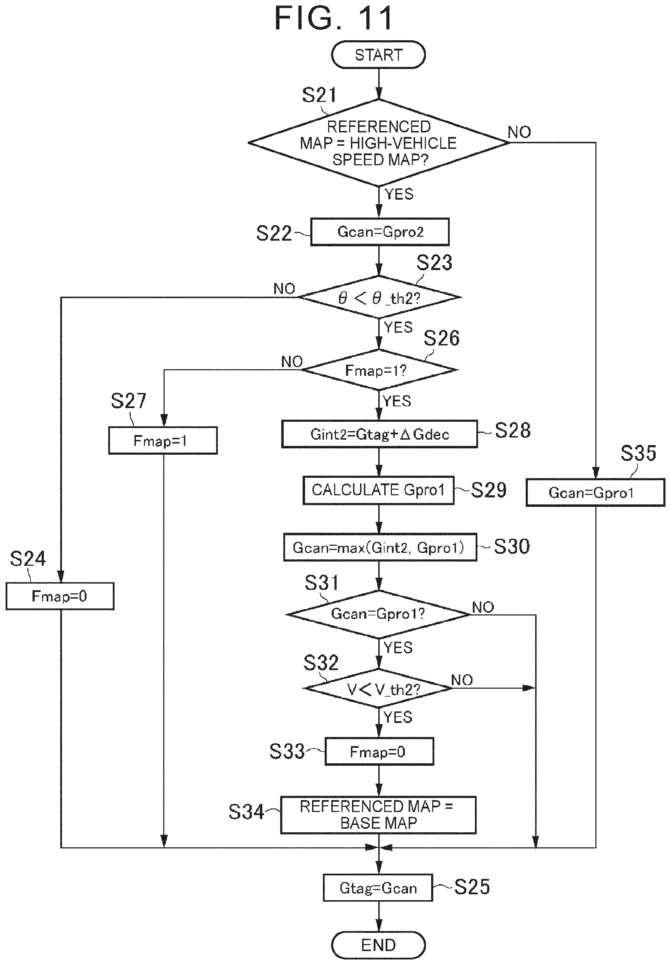

Next, description is provided on an example of control for switching the map referenced to set the target acceleration Gtag from the high-vehicle speed map to the base map. FIG. 11 is a flowchart for describing the control example. In the example illustrated in FIG. 11, determination is first made as to whether a map currently referenced to determine the target acceleration Gtag is the high-vehicle speed map (Step S21). When the result of determination in Step S21 is "YES" because the high-vehicle speed map is referenced, the second provisional target acceleration Gpro2 is calculated based on a current vehicle speed V, a current accelerator operation amount θ, and the high-vehicle speed map, and is stored in the ECU 8 as the candidate data Gcan (Step S22).

Next, determination is made as to whether the accelerator operation amount θ detected by the accelerator position sensor 7a is smaller than a second predetermined operation amount θ_th2 (Step S23). For example, the second predetermined operation amount θ_th2 can be set to an accelerator operation amount θ at which the acceleration G is "0" when the vehicle speed V is a second predetermined vehicle speed V_th2 in Step S32. For example, the second predetermined operation amount θ_th2 may be a variable that changes to a larger value as the road gradient angle increases. That is, determination is made in Step S23 as to whether the accelerator pedal 4 is depressed up to the lower limit operation amount within the range that achieves the comfortable foot posture, or up to the vicinity of the lower limit operation amount.

When the result of determination in Step S23 is "NO" because the accelerator operation amount θ is equal to or larger than the second predetermined operation amount θ_th2, the flag Fmap indicating that transition of the referenced map is in progress is kept at "0" (OFF) (Step S24). Next, the candidate data Gcan stored in Step S22 is temporarily stored in the ECU 8 as the target acceleration Gtag (Step S25), and the routine is terminated temporarily. That is, the second provisional target acceleration Gpro2 is set to the target acceleration Gtag. The braking force is controlled based on the target acceleration Gtag stored in Step S25.

When the result of determination in Step S23 is "YES" because the accelerator operation amount θ is smaller than the second predetermined operation amount θ_th2, determination is made as to whether the flag Fmap is "1" (ON) (Step S26). That is, determination is made as to whether control for transition of the referenced map is already executed when the current routine is executed. In other words, determination is made as to whether the control for transition of the referenced map is not completed at the end of the previous routine.

When the result of determination in Step S26 is "NO" because the flag Fmap is not "1", that is, when the control for transition of the map is not executed currently, the flag Fmap is switched to "1" (Step S27), and the operation proceeds to Step S25. That is, the second provisional target acceleration Gpro2 determined in Step S22 is set to the target acceleration Gtag. When the result of determination in Step S26 is "YES" because the flag Fmap is "1", a second transient acceleration (intermediate acceleration) Gint2 is calculated by adding a predetermined acceleration ΔGdec to a target acceleration Gtag stored in the ECU 8 in the previous routine (Step S28). The predetermined acceleration ΔGdec for use in Step S28 is set to a value smaller than an amount of change in the acceleration G due to a decrease in the vehicle speed V when the acceleration is controlled based on the high-vehicle speed map. Further, the predetermined acceleration ΔGdec is set so that the rate of change in the acceleration does not increase excessively when the map is switched to the base map as described later.

Next, the first provisional target acceleration Gprol is determined based on a current accelerator operation amount θ and the base map (Step S29). The candidate data Gcan is overwritten with an acceleration G_max, and is stored in the ECU 8 (Step S30). The acceleration G_max is a larger one of the second transient acceleration Gint2 calculated in Step S28 and the first provisional target acceleration Gprol calculated in Step S29. In this case, an acceleration when the vehicle Ve is decelerated is calculated as a negative value, and therefore the candidate data Gcan is overwritten in Step S30 with an acceleration having a smaller absolute value, in other words, a smaller deceleration out of the second transient acceleration Gint2 and the first provisional target acceleration Gprol.

Next, determination is made as to whether the candidate data Gcan is the first provisional target acceleration Gprol, that is, whether the acceleration G_max selected in Step S30 is the first provisional target acceleration Gprol (Step S31). Step S31 is provided to determine whether the acceleration does not change stepwise even if the referenced map is switched. That is, Step S31 is provided to determine whether one of the conditions for switching the referenced map to the base map is satisfied.

When the result of determination in Step S31 is "NO" because the second transient acceleration Gint2 is larger than the first provisional target acceleration Gprol, the operation proceeds to Step S25 without executing subsequent steps. That is, the candidate data Gcan overwritten in Step S30 (in this case, the second transient acceleration Gint2) is temporarily stored in the ECU 8 as the target acceleration Gtag.

As described above, the driving force control apparatus according to the embodiment of the present invention is intended to set the accelerator operation amount during the steady traveling within the predetermined operation amount range that achieves the driver's comfortable foot posture, and to restrain the increase in the amount of change in the driving force relative to the amount of change in the accelerator operation amount within the predetermined operation amount range. When the depression amount of the accelerator pedal 4 is slightly reduced at a relatively high vehicle speed and the vehicle speed at which the vehicle Ve travels steadily at the reduced accelerator operation amount is equal to or higher than the second predetermined vehicle speed V_th2, the vehicle Ve can travel steadily at an operation amount that achieves the driver's comfortable foot posture by setting the target acceleration Gtag based on the high-vehicle speed map without switching the map to the base map. In other words, if the map referenced to set the driving force is switched to the base map at a high vehicle speed, the depression amount of the accelerator pedal 4 that achieves the steady traveling may be larger than the upper limit value of the operation amount that achieves the driver's comfortable foot posture.

When the result of determination in Step S31 is "YES" because the first provisional target acceleration Gprol is larger than the second transient acceleration Gint2, determination is made as to whether the current vehicle speed V is lower than the second predetermined vehicle speed V_th2 (Step S32). The second predetermined vehicle speed V_th2 is provided to determine whether the map referenced to set the driving force is to be switched from the high-vehicle speed map to the low-vehicle speed map. For example, the second predetermined vehicle speed V_th2 may be a vehicle speed determined based on the base map so that the acceleration is "0" when the driver depresses the accelerator pedal 4 at the lower limit value of the accelerator operation amount that achieves the driver's comfortable foot posture. The second predetermined vehicle speed V_th2 may be the same vehicle speed as that in Step S12 of FIG. 8, or may be provided with a hysteresis while being set to be lower than the vehicle speed in Step S12 of FIG. 8. Step S12 of FIG. 8 and Step S32 of FIG. 11 are examples of steps performed by a "judging unit" in the embodiment of the present invention.

When the result of determination in Step S32 is "NO" because the current vehicle speed V is equal to or higher than the second predetermined vehicle speed V_th2, the operation proceeds to Step S25 without executing subsequent steps. That is, the candidate data Gcan overwritten in Step S30 (in this case, the first provisional target acceleration Gpro1) is temporarily stored in the ECU 8 as the target acceleration Gtag. When the result of determination in Step S32 is "YES" because the current vehicle speed V is lower than the second predetermined vehicle speed V_th2, the flag Fmap is switched to 0 (Step S33), the referenced map is switched to the base map (Step S34), and the operation proceeds to Step S25. That is, the candidate data Gcan overwritten in Step S30 (in this case, the first provisional target acceleration Gpro1) is temporarily stored in the ECU 8 as the target acceleration Gtag.

When the result of determination in Step S21 is "NO" because the currently referenced map is not the high-vehicle speed map, the first provisional target acceleration Gprol is calculated based on a current vehicle speed V, a current accelerator operation amount θ, and the base map, and is stored in the ECU 8 as the candidate data Gcan (Step S35). Then, the candidate data Gcan is temporarily stored in the ECU 8 as the target acceleration Gtag (Step S25), and the routine is terminated temporarily.

In the control example illustrated in FIG. 11, the referenced map is switched from the high-vehicle speed map to the base map when two conditions are satisfied. The first condition is that the first provisional target acceleration Gprol is larger than the second transient acceleration Gint2. The second condition is that the vehicle speed V is lower than the second predetermined vehicle speed V_th2. The driving force (braking force) is controlled based on the high-vehicle speed map when the accelerator operation amount is set within the range that achieves the comfortable foot posture before the two conditions are satisfied. The driving force (braking force) is controlled based on the base map when the accelerator operation amount is set within the range that achieves the comfortable foot posture after the two conditions are satisfied. The condition that the first provisional target acceleration Gprol is larger than the second transient acceleration Gint2 is provided to restrain a stepwise change in the acceleration along with map switching. The driving force control apparatus according to the embodiment of the present invention may not use this condition.

The base map and the high-vehicle speed map are defined so that the same braking force is generated in a fully released state in which the accelerator operation amount is "0". The predetermined acceleration ΔGdec is controlled so that a braking force larger than the braking force based on the high-vehicle speed map is generated. The second transient acceleration Gint2 or the first provisional target acceleration Gprol that has a larger acceleration (smaller deceleration) is selected. Thus, in the fully released state, the high-vehicle speed map may be switched to the base map based on the vehicle speed without the calculation in Step S28 to Step S31.

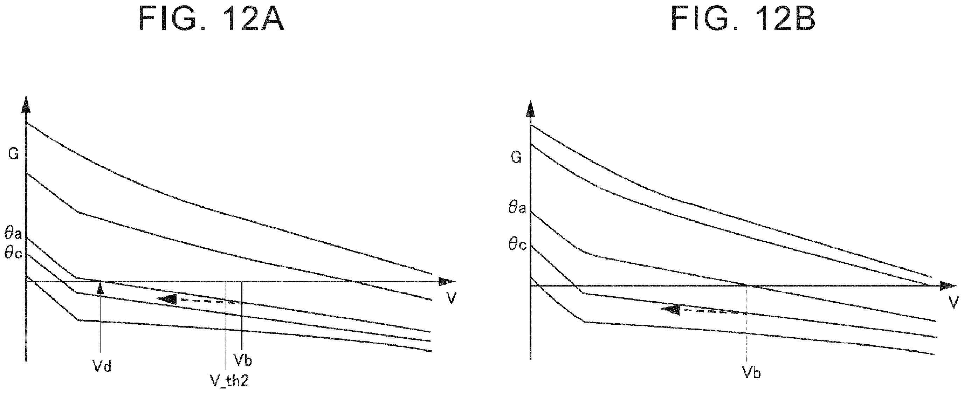

FIG. 12A and FIG. 12B are diagrams for describing a change in the target acceleration Gtag when the control in the example illustrated in FIG. 11 is executed. FIG. 12A illustrates the base map. FIG. 12B illustrates the high-vehicle speed map. In a state in which the vehicle Ve is traveling steadily at the vehicle speed Vb by depressing the accelerator pedal 4 by the accelerator operation amount θa, the vehicle Ve is decelerated by reducing the accelerator operation amount to θc, and the map is switched to the base map. Then, the vehicle Ve travels steadily by depressing the accelerator pedal 4 up to the accelerator operation amount θa. In the example illustrated in FIG. 12A and FIG. 12B, the target acceleration Gtag is set by referencing the high-vehicle speed map at the vehicle speed Vb.

Since the high-vehicle speed map is referenced at the vehicle speed Vb in the example illustrated in FIG. 12A and FIG. 12B, the result of determination in Step S21 of FIG. 11 is "YES", and the second provisional target acceleration Gpro2 is determined based on the high-vehicle speed map. When the accelerator operation amount is θa at the vehicle speed Vb, the result of determination in Step S23 of FIG. 11 is "NO", and therefore the second provisional target acceleration Gpro2 is set as the target acceleration Gtag. When the accelerator operation amount is reduced to and kept at θc smaller than the second predetermined operation amount θ_th2 in that state, the second provisional target acceleration Gpro2 is first set as the target acceleration Gtag upon the decrease in the accelerator operation amount to θc. In a subsequent routine in the flowchart illustrated in FIG. 11, the second transient acceleration Gint2 obtained by adding the predetermined acceleration ΔGdec to the second provisional target acceleration Gpro2 is set as the target acceleration Gtag. That is, the target acceleration Gtag gradually increases so that the rate of change in the acceleration relatively decreases as indicated by a dashed line in FIG. 12B.

In the example illustrated in FIG. 12A and FIG. 12B, the vehicle speed V is reduced to be lower than the second predetermined vehicle speed V_th2, and the second transient acceleration Gint2 at the second predetermined vehicle speed V_th2 is larger than the first provisional target acceleration Gprol. Therefore, the result of determination in Step S31 of FIG. 11 is "NO" until the second transient acceleration Gint2 becomes smaller than the first provisional target acceleration Gprol at a vehicle speed Vd illustrated in FIG. 12A. Thus, the second transient acceleration Gint2 is set as the target acceleration Gtag.

When the second transient acceleration Gint2 is smaller than the first provisional target acceleration Gprol at the vehicle speed Vd, the result of determination in Step S31 of FIG. 11 is "YES". As a result, the first provisional target acceleration Gprol is set as the target acceleration Gtag. Since the vehicle speed Vd is lower than the second predetermined vehicle speed V_th2, the result of determination in Step S32 of FIG. 11 is "YES" simultaneously with the timing when the result of determination in Step S31 is "YES". Thus, the referenced map is switched to the base map.

As a result, the target acceleration Gtag when the accelerator operation amount is increased from θc to θa at the vehicle speed Vd is the first provisional target acceleration Gprol determined based on the base map. Therefore, the vehicle Ve can travel steadily at the accelerator operation amount θa even after the vehicle Ve is decelerated. That is, the vehicle Ve can travel steadily in a comfortable foot posture. In this example, the vehicle Ve travels steadily by returning the accelerator operation amount to θa after the vehicle Ve is decelerated, but the accelerator operation amount may be returned to an operation amount larger or smaller than θa. In this case as well, the accelerator operation amount θ that can achieve the steady traveling can be set so that the driver is in the comfortable foot posture as compared to the case where the target acceleration Gtag is set based on the high-vehicle speed map.

By switching the high-vehicle speed map to the base map during deceleration, effects similar to those during acceleration can be attained.

The driving force control apparatus according to the embodiment of the present invention may include three or more maps, and control the driving force or the braking force by switching among the maps based on the vehicle speed. Examples of the maps include a map defined so that the vehicle travels steadily at an accelerator operation amount in a predetermined range when the vehicle speed is relatively low, a map defined so that the vehicle travels steadily at the accelerator operation amount in the predetermined range when the vehicle speed is relatively high, and a map defined so that the vehicle travels steadily at the accelerator operation amount in the predetermined range when the vehicle speed is an intermediate vehicle speed between the relatively low and relatively high vehicle speeds.

The driving force control apparatus according to the embodiment of the present invention is not limited to the configuration in which the referenced map is switched as described above. For example, the driving force control apparatus may include the base map alone, and determine the target driving force by multiplying the first provisional target acceleration Gprol by a coefficient in accordance with the vehicle speed. As indicated by a dashed line in FIG. 3, the driving force control apparatus may vary the corrected value θ' relative to the accelerator operation amount θ depending on the vehicle speed, that is, determine a first corrected value θ1 associated with a low vehicle speed and a second corrected value θ2 associated with a high vehicle speed and larger than the first corrected value θ1, and may determine the target driving force based on the corrected values and the base map. Further, an arithmetic expression that defines a relationship between the accelerator operation amount and the target driving force may be prepared instead of using the driving force map, and the arithmetic expression may be provided with a correction term in accordance with the vehicle speed.

## Claims

1. A driving force control apparatus for a vehicle, comprising:
an operation amount detection unit (7a) configured to detect an operation amount of an accelerator pedal operated by a driver;
a vehicle speed detection unit (7d) configured to detect a vehicle speed; and
an electronic control unit (8) configured to:
determine a target driving force based on the operation amount of the accelerator pedal that is detected by the operation amount detection unit (7a) and the vehicle speed that is detected by the vehicle speed detection unit (7d), and output a command signal based on the target driving force that is determined;
determine at least two provisional target driving forces based on the operation amount of the accelerator pedal and the vehicle speed, the at least two provisional target driving forces including a first provisional target driving force and a second provisional target driving force larger than the first provisional target driving force;
determine, based on the vehicle speed detected by the vehicle speed detection unit (7d), whether the vehicle speed is equal to or higher than a predetermined vehicle speed;
determine, when the vehicle speed is lower than the predetermined vehicle speed, the target driving force in a case where the operation amount of the accelerator pedal is in a predetermined range, based on the first provisional target driving force; and
determine, when the vehicle speed is equal to or higher than the predetermined vehicle speed, the target driving force in the case where the operation amount of the accelerator pedal is in the predetermined range, based on the second provisional target driving force.

2. The driving force control apparatus according to claim 1, wherein the electronic control unit (8) includes a predetermined first driving force map for determining the first provisional target driving force based on the operation amount of the accelerator pedal and the vehicle speed and a predetermined second driving force map for determining the second provisional target driving force based on the operation amount of the accelerator pedal and the vehicle speed.

3. The driving force control apparatus according to claim 1, wherein:
the electronic control unit (8) is configured to correct the operation amount of the accelerator pedal to a first corrected value and a second corrected value larger than the first corrected value; and
the electronic control unit (8) includes a third driving force map for determining the first provisional target driving force based on the first corrected value and the vehicle speed, and determining the second provisional target driving force based on the second corrected value and the vehicle speed.

4. The driving force control apparatus according to any one of claims 1 to 3, wherein the electronic control unit (8) is configured to:
set the first provisional target driving force such that the first provisional target driving force decreases as the vehicle speed increases;
determine a third provisional target driving force that decreases at a predetermined decrease rate lower than a decrease rate of the first provisional target driving force that decreases as the vehicle speed increases; and
determine the target driving force based on the third provisional target driving force when the operation amount of the accelerator pedal increases while the vehicle is traveling at the vehicle speed that is lower than the predetermined vehicle speed.

5. The driving force control apparatus according to claim 4, wherein the electronic control unit (8) is configured to:
set the second provisional target driving force such that the second provisional target driving force decreases as the vehicle speed increases; and
determine the target driving force based on a smaller one of the second provisional target driving force and the third provisional target driving force.
